Europäisches Patentamt

(19) European Patent Office

Office européen des brevets

(11) Publication number: 0 343 998
A1

(12) **EUROPEAN PATENT APPLICATION**

(21) Application number: 89305328.0

(22) Date of filing: 25.05.89

(51) Int. Cl.⁴: **C 02 F 9/00**
C 02 F 1/32, F 24 F 6/02,
C 02 F 1/68, C 02 F 1/00

(30) Priority: 25.05.88 GB 8812324

(43) Date of publication of application:
29.11.89 Bulletin 89/48

(84) Designated Contracting States:
AT BE CH DE ES FR GB GR IT LI LU NL SE

(71) Applicant: JOHN M. FULLER LTD
Deneway House Darkes Lane
Potters Bar Herts EN6 1AQ (GB)

(72) Inventor: Fuller, John M.
7 Higgins Lane Welham Green
North Mymms Herts AL9 7LT (GB)

Steer, Keith T.
8 Wessex Gardens
Twyford Berks RG10 0A7 (GB)

(74) Representative: Mayes, Stuart David et al
BOULT, WADE & TENNANT 27 Furnival Street
London, EC4A 1PQ (GB)

(54) Water treatment systems.

(57) A method of treatment of water comprises the steps of passing a flow of water through a filtering device (5) for removing particles in suspension in the water and passing at least a proportion of the filtered water through an ultraviolet light irradiating device (11) for disinfecting the water.

FIG. 1.

EP 0 343 998 A1

**Description**

# WATER TREATMENT SYSTEMS

This invention relates to water treatment systems and particularly but not exclusively to a method of water treatment and apparatus therefor wherein the water is for use in evaporative cooling systems.

Many cooling systems for use industrially or for air conditioning or refrigeration, use water as the cooling agent. Often the water is used in the form of fine droplets which are sprayed over the cooling system coils and which evaporate on contact with the warm coils so drawing heat away. The water used in such systems can contain or develop harmful bacteria eg, Legionella Pneumophila.

To overcome the problem of harmful bacteria in such cooling systems, a conventional solution is to add anti-bacterial chemicals to the water. However, this is an expensive and labour-intensive exercise, and one which is all too often allowed to lapse in practice.

The present invention provides a method of water treatment which comprises the steps of passing a flow of water through filtering means for removing particles in suspension in the water and passing at least a proportion of the filtered water through an ultraviolet light irradiating device for disinfecting the water.

The invention further provides apparatus for treatment of water, which comprises means for passing a flow of water through filtering means for removing particles in suspension in the water, and means for passing at least a proportion of the filtered water through an ultraviolet light irradiating device for disinfecting the water.

The invention also provides a cooling system incorporating apparatus for treatment of water for the cooling system as defined herein and a control system for regulating the steps of the method as defined herein.

The present invention will now be described, by way of example, with reference to the accompanying drawings, in which;

Figure 1 is a schematic diagram showing a water treatment system in accordance with the present invention, and

Figure 2 is a circuit diagram for an automatic control for a water treatment system in accordance with the invention.

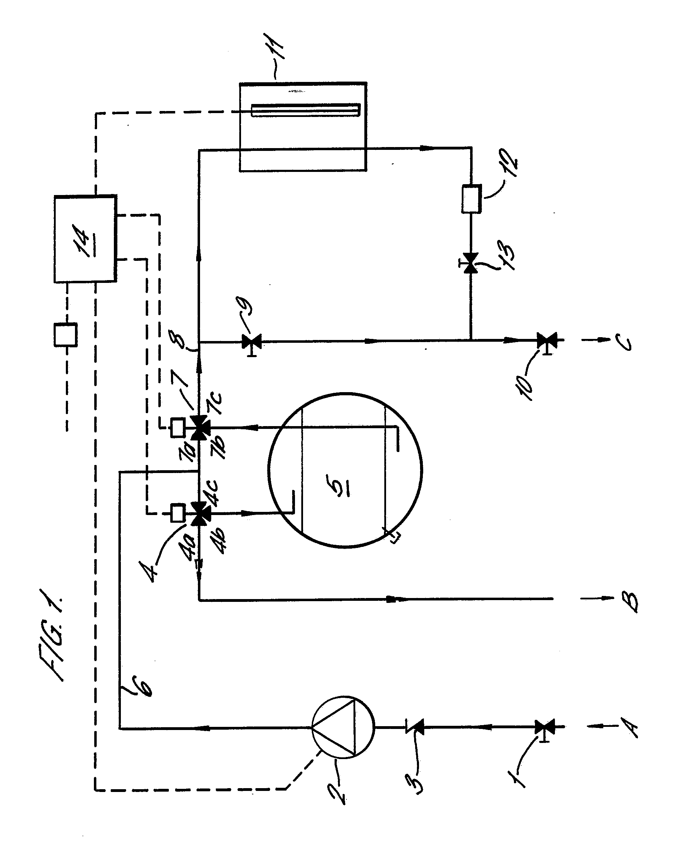

There is seen in Figure 1 a water treatment system. Water is drawn in from an inlet A via an isolating valve 1. The water is drawn in by the action of a pump 2 which circulates the water about the treatment system. The water passes a first non-return valve 3 and then through the pump 2. After passing through the pump 2 the water flows to a port 4c of a 3-port valve 4 via a conduit 6. The 3-port valve 4 has a port 4a which is connected to a drain B, and a port 4b which is connected to a filtering device 5. Valve 4 is a motorised valve and is operable from a control unit 14.

When the treatment system is operating normally, port 4a is closed and ports 4b and 4c are open. The water therefore flows in through port 4c from the pump 2 and out through port 4b to the filtering device 5.

Once the water has passed through the filtering device 5 it flows to a second 3-port valve 7, arriving at a port 7b thereof. This 3-port valve 7 has a port 7a which is connected to the conduit 6 so that the pump 2, the 3-port valve 4 and the 3-port valve 7 are all fluidly connected. The 3-port valve 7 also has a port 7c which is connected to an outlet conduit 8. The valve 7 is also a motorised valve and is operable from the control unit 14. When the system is operating normally, port 7a is closed and ports 7b and 7c are open. The filtered water therefore flows in through port 7b from the filtering device 5 and on through port 7c into the outlet conduit 8.

Having passed through the 3-port valve 7, the filtered water is divided. A first portion of the filtered water flows through a balancing valve 9 and an isolating valve 10 to an outlet C of the treatment system. A second portion of the filtered water flows through an ultraviolet irradiating device 11 and then past a flow meter 12 and a balancing valve 13 to the outlet C of the treatment system, via the isolating valve 10. The water drawn in from inlet A is thus delivered from outlet C, with the water having been filtered and at least a proportion of the water irradiated with ultraviolet light.

The ultraviolet irradiating device 11 may be one that comprises a set of ultraviolet lamps which are situated in close proximity to conduits through which the water flows, for killing resident bacteria in the water by the irradiation of ultraviolet light. The intensity of the ultraviolet radiation may be chosen for the desired degree of disinfection of the water. For example it has been found that the approximate dosage of ultraviolet radiation required to destroy most common micro-organisms is 6,000-10,000 microwatts/sec/cm$^2$. By suitable adjustment of the water flows through the balancing valves 9 and 13 the amount of water passing through the ultraviolet irradiating device 11 may be controlled.

The filtering device 5 is one which is designed for removing particles in suspension in the water. A suitable filtering device 5 is one having a filtering medium, eg sand, though which the water is passed. The device 5 may be capable of removing particles down to a size of as little as 7 microns. The filtering device is needed in the system to remove particles in suspension in the water so that the ultraviolet radiating device can operate effectively.

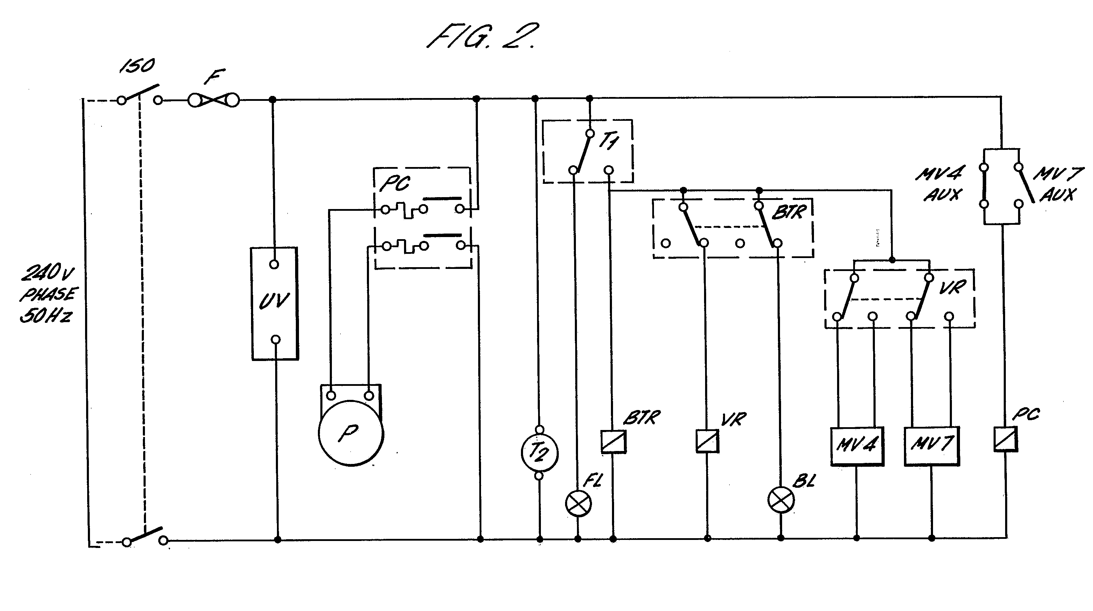

The treatment system is operated automatically by the control unit 14 and a typical basic control circuit therefor is shown in Fig. 2.

The treatment system may be connected to an evaporative cooling system. Such cooling systems are usually closed systems having a constant amount of water contained within them for cooling and the water is contained in a sump when not being used. The treatment system would be connected to the sump of the cooling system so that the water in the sump is drawn through the inlet A of the treatment system, and the treated water is returned to the sump through the outlet C of the treatment system. Continuous circulation of the water through the treatment system ensures that although only a portion of the circulating water is irradiated at any one time, eventually all the water is disinfected. In practice, the water is preferably fully disinfected 8 to 12 times in every 24 hours.

When water is used as a cooling agent in such closed evaporative cooling systems it is necessary to remove some of the water from the system so as to ensure that the concentration of totally dissolved solids is not allowed to exceed a certain limit, usually twice the concentration of totally dissolved solids in the mains water supply. Otherwise the solids may precipitate out of the water and so cause fouling to the cooling system. The treatment system has a backwash cycle to deal with this by cleaning the filtering device 5 and removing some of the water containing the particles from the filtering device to the drain B. The backwash cycle is operated by the control unit 14.

When the treatment system switches over to the backwash cycle, water is drawn into the inlet A under the action of the pump 2 past the non-return valve 3. The water then flows through the pump 2 and along the conduit 6. Port 4c is now closed, however, so that the water flows to the second 3-port valve 7. Port 7a is now open, as is port 7b, whilst port 7c is closed, so that the water flows through port 7a and out of port 7b to the filtering device 5. Under the action of the pump 2 the water flows in the reverse direction through the filtering medium of the filtering device 5, collecting as it does so the particles which had been filtered out by the filtering device. With ports 4a and 4b now open, the water with the particles in suspension from the filtering device 5 are able to pass through port 4b and out of port 4a to the drain B. The backwash cycle need only be carried out for a short period every now and then, eg, for a few minutes at intermittant intervals through a 24 hour period, in order to control the concentration of soluble solids and to keep the filtering device working efficiently.

Referring now to Figure 2, when power is supplied to the control system and the isolator ISO is switched on, the ultraviolet lamps UV are energised. The lamps will remain energised whilst the power supply is maintained. With the treatment system operating normally, the 3-port motorised valve auxiliary, to the 3-port valve 4, MV4 AUX is closed and the second 3-port motorised valve auxiliary, to the 3-port valve 7, MV7 AUX is open (as shown). The pump contactor PC is energised and the pump P operates to circulate water through the treatment system. A timer $T_1$ is preset so that after a preselected time interval the treatment system reverts to the backwash cycle. The timer $T_1$ is set with time increments over a 24 hour period and is used to initiate the backwash cycle.

When the timer $T_1$ initiates the backwash cycle the backwash time relay BTR is energised and is preset for a backwash cycle of between 1 to 30 minutes, the normal setting is approximately 4 minutes. When the coil of the backwash time relay BTR is energised there is a time delay before the contacts change over. At the same time, power is being supplied to the valve relay VR which energises the motors on the 3-port motorised valves MV4 and MV7 and moves the 3-port valves to backwash cycle position. As the 3-port motorised valve MV4 is moved its auxiliary switch MV4 AUX is opened and the pump contactor PC and so pump P is de-energised. This ensures that no water is circulated as the 3-port valves are changing to their backwash cycle position. When the 3-port valves have reached their positions for the backwash cycle the 3-port motorised valve auxiliary MV7 AUX will have closed and this then re-energises the pump contactor PC and thus the pump P so that circulation of the water is resumed. The backwash cycle will then continue until the backwash time relay BTR reaches the end of its set time and switches over. The power to the valve relay VR is then lost and this operates the 3-port valves to return to their original positions. As outlined above, as the 3-port valves change positions power to the pump P is stopped to prevent circulation of the water during the changeover. The treatment system is then operating normally and will continue to do so until the timer T initiates the backwash cycle again.

By way of example, details of a specific water treatment system are given below:

| | |
|---|---|
| Maximum Water Content Of System To Be Treated | 7800 litres (1700 Imp Gallons) |
| Power Supply | 240v/1 PH/50 Hz |
| Maximum Full Load Current | 7.5 amps |
| Maximum Starting Current | 25 amps |
| Ultra-Violet Lamp Power/Each | 65 W |
| No Lamps | 2 |
| Approximate Water Recirculation Rate | 4.0 1/s |
| Approximate External Head Available | 10 mwg |
| Filter Media Charge | 90 kg |
| Filter Area | 0.2 m2 |
| Inhibitor Storage Capacity | 120 litres |
| Initial Charge Of Inhibitor Supplied | 75 kg |
| Unit Overall          - Length | 2000 mm |
|                       - Width | 700 mm |
|                       - Height | 1290 mm |
| Pipework Connections   - Inlet | 2 in dia nominal bore ABS |

4

```
    - Outlet        2    in    dia   nominal
                    bore ABS

    - Drain         2    in    dia   nominal
                    bore ABS
```

The system is a packaged, stand alone system designed specifically to meet the requirements of the evaporative cooling industry. Each unit provides filtration, biocidal control, TDS control and scale and corrosion inhibition within a packaged unit without the use of toxic biocide chemicals.

The system is suitable for the treatment of systems with a water content of up to 7800 litres (1700 imperial gallons) and is designed to operate twenty-four hours per day, every day, regardless of system operation, in order to provide constant protection.

The unit is designed to keep maintenance to a minimum and requires only periodic clearing of the basket filter as necessary and annual changing of the UV lamp and checking of the filter media. Full logging facilities (hours run, etc) are included within the control panel.

The unit requires a 240 volt, single phase, 50 Hz power supply and is fully automatic when properly installed and commissioned.

## System Operation

The system is designed as an independent Water Treatment System predominantly for use with evaporative cooling equipment.

It is normally installed with the unit inlet and discharge connected to the sump of a cooling tower, closed circuit cooler or evaporative condenser in such a way as to ensure constant water movement within the sump. This "side stream" type of installation allows the system to operate completely independently of the system being served.

In its normal filter mode water is drawn from the cooling tower sump by the circulating pump. Before entering the pump suction the flow first enters the basket strainer and any large debris is collected thus preventing choking of the pump.

All of the flow from the pump discharge is passed through the high efficiency filter where most solids of approximately 20 microns or above are removed.

On exiting the filter the flow is divided and a set proportion is passed through the ultra-violet biocidal unit - where it received a minimum dosage of UV radiation of 30,000 microwatts/sec/cm2.

The remainder of the flow by passes the UV unit.

Before returning to the cooling tower sump the cleaned flow is sampled by the conductivity cell which provides a visual indication of the system water conductivity and signals to the control system when bleed is required.

Also, before exiting the unit the proportional dosing pump injects scale and corrosion inhibitors drawn from the holding vessel into the flow as necessary.

This filter mode continues for twenty four hours per day, every day, interrupted only by the bleedclean cycle.

The bleedclean cycles has a dual function -firstly, it serves to ensure the filter media is cleaned regularly in order to prevent clogging, and secondly it provides positive bleed from the evaporative system.

The bleedclean cycle is controlled by a combination of time and system water conductivity and may be adjusted on site to suit a wide variety of applications.

Normally the bleedclean cycle is set so that regardless of any other controls the cycle is initiated once per twenty four hour period in order to ensure proper operation of the filter. At other times the bleedclean cycle may only be initiated if the time control and the conductivity control both call for it.

In this instance the motorised valves will start to re-set and the circulating pump will de-energise. Once the motorised valves have reached their new positions the pump will re-start and the unit is in the bleedclean mode. At the end of the bleedclean cycle the motorised valves will return to their original positions. Whilst the valves are in motion the system circulating pump would again be de-energised and only re-started when the unit is ready to commence its normal filter mode.

The bleedclean cycle is fully adjustable both in terms of frequency of operation (or possible operation) and cycle duration.

The control system incorporates a bleedclean cycle counter so that, by knowing the flow rate achieved during bleedclean and the actual bleedclean cycle time, the water usauge of the system may be monitored.

The effluent from the unit during bleedclean is discharge from the unit by a third connection which should be piped away to drain.

The proportional dosing system operates by receiving a signal proportional to the amount of make up water entering the cooling system via the proportional water meter.

Suitable quantities of scale and corrosion inhibitor are injected by the dosing pump into the return water flow. This system is available to operate at all times except when the system is in the bleedclean mode in order to prevent the unnecessary wastage of inhibitor chemicals.

1) Circulating Pump

Each unit contains its own circulating pump with integral basket strainer in order to prevent clogging by large debris which may enter the system.

The pump motor is a 0.55 kw (0.75 hp) heavy duty single phase motor designed for continuous quiet operation.

The integral basket strainer is a 127 mm diameter (5 inch) strainer featuring a "lock in" removable basket and clear lid for visual inspection.

2) Filter Unit

The filter is of circular design and incorporates a clear plastic lid for visual inspection, particularly of the bleedclean cycle. This lid is easily removed for media replacement, checking and servicing.

The filter incorporates a comprehensive water distribution and collection system suitable for downward flow in the filter mode and upward flow for the bleedclean mode.

In operation all of the water circulated by the unit pump is passed through the filter which removes solid matter down to approximately twenty microns in size.

3) Ultra Violet Biocidal Unit

The ultra-violet biocidal unit incorporated within the system is enclosed within an inner cabinet manufactured from stainless steel.

Within this cabinet a proportion of the recircultaed flow is passed through 50 mm (2 inch) nominal bore Teflon tubes. Teflon is used in this application as it is a good transmitted of ultra-violet radiation, is resilient and resistant to fouling and corrosion.

Sited between the teflon tubes are the ultra-violet lamps. These lamps are 65 watt lamps designed to produce a minimum UV dosage of 30,000 microwatts/sec/cm2. The lamps are retained using easily removed electrical connections for ease of replacement.

The access cover to the UV unit incorporates a safety cut-out switch which de-energises the UV lamp whenever the cover is removed in order to safeguard maintenance and service personnel.

Each unit cover incorporates a visual indication of lamp operation via a small "jewel" located centrally.

4) Motorised Valves

The three-port motorised valves used in the unit are of the rotary type to ensure self cleaning of the valve face.

Each valve is fitted with an electric actuator suitable for operation on a 240 volt, single phase, 50 hz power supply and incorporating end-switches to signal the valve position to the control system. The actuators are easily removable from the valves for maintenance or servicing.

5) Pipework

The pipework used has a nominal bore of 50 mm (2 inch).

Incorporated within the pipework system is a manual three-port ball valve for directing a proportion of the main flow through the UV unit.

For measurement of the flow through the UV biocidal unit a direct reading flow meter is incorporated. This may be used to establish the correct flow through the UV unit during initial set up and checking during normal logging and maintenance.

6) Control System

The system incorporates a comprehensive automatic control system designed to control the filter operation, bleedclean mode, and TDS by measuring system water conductivity.

The control system utilises a two channel electronic programmer which incorporates a one hundred hour back up battery for retention of the set programme during power failure.

The programmer is of the seven day type and has a minimum on/off time of one minute - thus allowing full flexibility of the controls under greatly varying circumstances.

A record of the set programme may be kept on the system log incorporated within the unit cabinet.

In addition to the system programmer, the control panel includes all necessary contactors, relays, switches and interlocks to enable the unit to operate.

Indicator lamps on the fascia board of the control panel indicated power on, filter mode, bleedclean mode and fault.

Overload protection to the pump is by auto re-set thermal overloads and the control system and complete unit are protected by 1A and 20A fuse respectively. These devices are mounted in the control panel fascia for easy access for replacement/re-setting.

The control system incorporates a comprehensive fault indication system which also provides no-volt contacts for the connection of a remote alarm.

The unit fault lamp will illuminate should any of the following faults occur:-

    i)) Pump overload trip

    ii) UV lamp failure

iii) Motorised valves not positioning correctly
iv) Control fuse failure
v) No flow through UV unit (filter mode only)

Should the unit be subject to complete power failure or main fuse failure the unit fault lamp will not illuminate but the contacts for remote indication of fault will close thus enabling this situation to be detected.

Should the unit circulation pump trip on overload the unit would be generally de-energised and the unit would lock out. The unit fault lamp and remote fault indicator would energise. To re-set the unit is a simple matter of turning off and on again.

Should a UV lamp failure occur the unit would continue to run, thus providing filtration, but the unit fault lamp and remote fault indicator would be energised.

Also included on the unit control panel are an hours run meter and a bleedclean cycle counter - used for logging the unit operation, monitoring lamp life and assessing water usage.

### 7) TDS Control (optional)

In addition to the standard system controls an extra conductivity control panel may be included, along with a matching conductivity measuring probe.

This probe is located on the clean side of the filter to minimise fouling and is used to measure the conductivity of the system water.

The conductivity controller has a variable setting in the 0 to 10,000 micromohs range and incorporates a conductivity meter for visual indication of the system water conductivity for logging purposes.

In addition indicator lamps show high and low conductivity.

### 8) Proportional Dosing (optional)

The proportional dosing system comprises a chemical storage vessel, initial charge of inhibitor, a proportional dosing pump and a compatible water meter.

The storage vessel is an 120 litre polythene tank and is located in an enclosed side compartment within the unit so that access is available without opening the main compartment.

The dosing pump is located in the main compartment and is pre-wired to the unit control system. This pump draws the required amount of chemical inhibitor from the storage vessel and injects it in to the return of the unit, ensuring good mixing. This pump is interlocked with the main system such that it cannot operate during the bleedclean cycle.

The treatment system described above has the advantage of providing means for filtering and disinfecting water largely without need of supervision. The system does not rely upon the need for use of a regular supply of anti-bacterial chemicals.

The treatment system has been described with reference to its particular use with evaporative cooling systems. The treatment system though may be used in connection with many other systems where bacteria and particle free water is required, for example, swimming pools. Although the treatment system has been described using relays, 3-port valves, balancing valves and pumps etc similar valves and apparatus which are equally capable of performing the functions required, as described above, would be suitable also.

**Claims**

1. A method of water treatment which comprises the steps of passing a flow of water through filtering means for removing particles in suspension in the water and passing at least a proportion of the filtered water through an ultraviolet light irradiating device for disinfecting the water.

2. A method as claimed in Claim and comprising the further step of passing the flow of water through the filtering means in the reverse direction from time to time for removing filtered particles therefrom.

3. A method as claimed in Claim 1 or Claim 2 and comprising the step of controlling the proportion of the filtered water which passes through the irradiating device and/or the radiation intensity of the irradiating device to alter the degree of disinfection of the water.

4. A method as claimed in any preceding claim and including the step of monitoring the electrical conductivity of the water.

5. A method as claimed in any preceding claim and including the step of proportionally dosing the water with a chemical.

6. Apparatus for treatment of water, which comprises means for passing a flow of water through filtering means for removing particles in suspension in the water, and means for passing at least a proportion of the filtered water through an ultraviolet light irradiating device for disinfecting the water.

7. Apparatus as claimed in Claim 6 and further comprising means for passing the flow of water through the filtering means in the reverse direction from time to time for removing filtered particles therefrom..

8. Apparatus as claimed in Claim 6 or Claim 7 and comprising means for controlling the proportion of the filtered water which passes through the irradiating device and/or the radiation intensity of the irradiating device to alter the degree of disinfection of the water.

9. Apparatus as claimed in Claim 6, Claim 7 or Claim 8 and comprising means for monitoring the electrical conductivity of the water.

10. Apparatus as claimed in Claim 6, Claim 7, Claim 8 or Claim 9 and comprising means for proportionally dosing the water with a chemical.

11. Apparatus as claimed in any one of claims 6 to 10 and comprising a control system for regulating the steps of the method as claimed in any one of Claims to 5.

FIG.1.

FIG. 2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | BE-A- 855 768 (M.N.T.)<br>* Claims 1,4; figure 1 *<br>--- | 1-2,7 | C 02 F 9/00<br>C 02 F 1/32<br>F 24 F 6/02<br>C 02 F 1/68<br>C 02 F 1/00 |
| Y | BE-A- 682 414 (VAN STRAATEN CHEMICAL)<br>* Pages 8-10; figure VI *<br>--- | 1,3-6,8<br>-10 | |
| Y | US-A-4 336 223 (L. HILLMAN)<br>* Abstract; figure 8; column 4, lines 6-33 *<br>--- | 1,3-6,8<br>-10 | |
| A | US-A-4 623 467 (J.J. HAMLIN)<br>* Abstract; figure 1 *<br>--- | 1-11 | |
| A | CH-A- 457 302 (W.P. DE STOUTZ)<br>* Whole document *<br>----- | 1 | |

TECHNICAL FIELDS
SEARCHED (Int. Cl.4)

C 02 F

The present search report has been drawn up for all claims

| Place of search | Date of completion of the search | Examiner |
|---|---|---|
| THE HAGUE | 05-09-1989 | VAN AKOLEYEN H.T.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)